# FASCICULE DE BREVET EUROPEEN

(11) **EP 1 864 260 B1**
(45) Date de publication et mention de la délivrance du brevet: **05.01.2011**
(21) Numéro de dépôt: 06726023.2
(22) Date de dépôt: 03.03.2006
(51) Int. Cl.: G06F 17/30

(54) **PROCEDE DE RECONSTRUCTION D'IMAGE DANS UN GRAPHIQUE VECTORIEL**
VERFAHREN ZUR BILDREKONSTRUKTION IN EINER VEKTORGRAFIK
METHOD FOR IMAGE RECONSTRUCTION IN A VECTOR GRAPHIC

(30) Priorité: 04.03.2005 FR 0502185
(43) Date de publication de la demande: 12.12.2007
(73) Titulaire: Newscape Technology, 22300 Lannion (FR)
(72) Inventeur: Alain Rey, 75014 Paris (FR)
(74) Mandataire: Cabinet Plasseraud
(86) Numéro de dépôt international: PCT/FR2006/000490
(87) Numéro de publication internationale: WO 2006/092512

(56) Documents cités:
- XIAOFANG ZHOU ET AL: "Database support for spatial generalisation for WWW and mobile applications" WEB INFORMATION SYSTEMS ENGINEERING, 2002. WISE 2002. PROCEEDINGS OF THE THIRD INTERNATIONAL CONFERENCE ON 12-14 DEC. 2002, PISCATAWAY, NJ, USA,IEEE, 12 décembre 2002 (2002-12-12), pages 239-246, XP010632797 ISBN: 0-7695-1766-8
- SHAM PRASHER ET AL: "Efficient update and retrieval of objects in a multiresolution geospatial database" SCIENTIFIC AND STATISTICAL DATABASE MANAGEMENT, 2003. 15TH INTERNATIONAL CONFERENCE ON 9-11 JULY 2003, PISCATAWAY, NJ, USA,IEEE, 9 juillet 2003 (2003-07-09), pages 193-201, XP010646914 ISBN: 0-7695-1964-4
- DOUGLAS D H ET AL: "ALGORITHMS FOR THE REDUCTION OF THE NUMBER OF POINTS REQUIRED TO REPRESENT A DIGITIZED LINE OR ITS CARICATURE" CANADIAN CARTOGRAPHER, YORK UNIVERSITY, DOWNSVIEW, CA, vol. 10, no. 2, 1973, pages 112-122, XP009005710 ISSN: 0008-3127

## Description

La présente invention se rapporte au domaine du traitement des images numériques.

La présente invention se rapporte plus particulièrement au traitement des images numériques sous forme de graphique vectoriel pour la reconstruction d'une image comportant des zones délimitées par des lignes polygonales. Ceci est en particulier le cas dans le domaine des cartes géographiques.

Une application préférentielle de la présente invention mais aucunement limitative vise le téléchargement de données d'images vectorielles, telle qu'une carte géographique, sur un terminal à partir d'un serveur local ou distant et via un réseau de télécommunication.

Notamment, dans ce contexte, il est souhaité qu'un utilisateur du terminal puisse, d'une part, télécharger les données d'image sur son terminal et, d'autre part, naviguer dans l'image le plus rapidement possible. On entend par « naviguer dans l'image », typiquement le fait d'effectuer des zooms avant ou arrière sur une carte géographique, ou encore appliquer des déplacements « latéraux « dans la carte, dits, en anglais « drag and drop », c'est-à-dire des déplacements dans le plan de la carte à facteur d'échelle constant.

Toutefois, lorsque le terminal édite une première image et que l'utilisateur souhaite éditer une seconde image, correspondant par exemple à un zoom de la première image, le terminal se reconnecte au serveur pour télécharger systématiquement toutes les données d'images de la seconde image. D'une part, cette mesure grève les temps d'attente de téléchargement, et finalement, les coûts de télécommunication. D'autre part, elle limite considérablement le caractère interactif des échanges avec le serveur.

L'article par XIAOFANG ZHOU ET AL "Database support for spatial generalisation for WWW and mobile applications", PROCEEDINGS OF THE THIRD INTERNATIONAL CONFERENCE ON WEB INFORMATION SYSTEMS ENGINEERING 2002, pages 239-246, ISBN: 0-7695-1766-8, XP010632797, divulgue un procédé de simplification de données géographiques et de stockage dans une base de données pour la récuperation ultérieure.

La présente invention entend améliorer cette situation.

Elle est tout particulièrement applicable aux images sous forme de graphique vectoriel représentant des zones en trois dimensions pouvant représenter des éléments de différentes altitudes dans une application cartographique.

Pour ce faire, la présente invention est du type décrit ci-dessus et elle est remarquable, dans son acception la plus large, en ce qu'elle concerne un procédé de traitement de données d'images numériques sous forme de graphique vectoriel, les images comportant des zones délimitées par des lignes polygonales comportant les étapes consistant à :
- associer à chaque ligne polygonale une surface induite délimitée par l'ensemble des points définissant ladite ligne polygonale
- pour toutes les lignes polygonales, stocker en mémoire les points définissant lesdites lignes polygonales ;
- effectuer des simplifications successives desdites lignes polygonales en fonction d'un ensemble de coefficients de simplification ;
- associer à chaque ligne polygonale simplifiée une surface simplifiée induite délimitée par l'ensemble des points définissant ladite ligne polygonale simplifiée, chaque surface simplifiée ainsi obtenue étant décrite par un ensemble de triangles dont chacun des sommets appartient à la ligne polygonale simplifiée associée à ladite surface simplifiée
- mémoriser dans une base de données en fonction d'un identifiant de coefficient de simplification ledit ensemble de triangles décrivant ladite surface simplifiée associée audit coefficient de simplification ;
- réaliser un appel à ladite base de données de triangles, en fonction d'un identifiant de coefficient pour la reconstruction de ladite image simplifiée selon ledit coefficient de simplification.

Ces étapes sont préférentiellement menées auprès d'un serveur apte à coopérer avec un terminal dans un réseau de communication. Dans ce contexte, on télécharge les données d'image d'un serveur vers un terminal, et :
- la base de données est constituée auprès du serveur ;
- les triangles précités résultant d'une simplification sont téléchargés du serveur selon une requête du terminal comprenant un identifiant du coefficient de simplification ;
- le terminal construit et édite une image selon le coefficient de simplification identifié.

La présente invention vise aussi l'application du procédé selon l'invention à l'édition de cartes géographiques sous forme de graphiques vectoriels.

La présente invention vise également un système pour la mise en oeuvre du procédé comprenant un terminal et un serveur reliés par un réseau de télécommunication, pour l'édition de graphiques vectoriels sur le terminal.

La présente invention vise également un serveur d'un tel système, et un terminal d'un tel système.

La présente invention concerne aussi un programme d'ordinateur destiné à être stocké dans une mémoire d'un serveur selon la présente invention et comportant des instructions pour :
- lire des données de points d'une image vectorielle ;
- mettre en oeuvre au moins une partie des étapes de traitement du procédé selon l'invention ;

La présente invention vise aussi un programme d'ordinateur pour destiné à être stocké dans une mémoire d'un terminal d'un réseau de télécommunication et comportant des instructions pour :
- lire des données dans la base de données selon l'invention ;
- éditer, à partir de ces données, une image sur un écran d'affichage du terminal.

On comprendra mieux l'invention à l'aide de la description, faite ci-après à titre purement explicatif, d'un mode de réalisation de l'invention, en référence aux figures annexées :
- les figures 1a et 1b illustrent respectivement une carte géographique et un zoom avant mené sur cette carte,
- les figures 2a à 2c représentent schématiquement une ligne polygonale à différents degrés de simplification croissants,
- les figures 3a à 3c représentent schématiquement les lignes polygonales simplifiées définissant des surfaces triangulées,
- les figures 4a et 4b représentent schématiquement les échanges entre un terminal et un serveur, respectivement selon l'art antérieur et selon l'invention,
- la figure 5 illustre un tableau des triangles stockés dans la triangulation précitée,
- la figure 6 illustre d'application de la présente invention dans le cas particulier où une ligne polygonale reste ouverte,
- les figures 7a à 7d représentent respectivement une image initiale, un zoom avant sur cette image initiale, une translation, et une reconstruction locale respectant la précision à l'échelle requise.

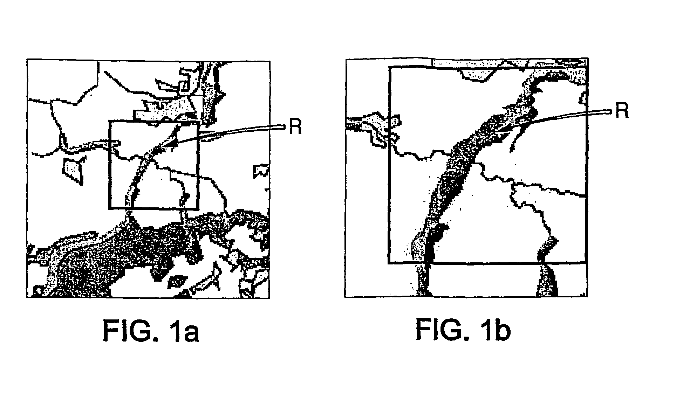

On se réfère aux figures 1a et 1b pour décrire un exemple de traitement de simplification/réduction d'une image. Le traitement dit de « généralisation », en cartographie, consiste à simplifier un tracé en fonction de l'échelle à laquelle on le représente pour le rendre plus facilement lisible par l'utilisateur, tout en essayant de conserver au mieux sa géométrie. Ainsi, au 1/50000^{ième}, et 1/25000^{ième}, une rivière R sera représentée par une approximation grossière de son lit (figure 1a), puis par un tracé comportant toute les courbures qu'emprunte son trajet de la source au fleuve (figure 1b).

Ce principe de perte de précision en fonction de l'échelle est également appelé réduction polygonale dans des domaines tels que la géométrie numérique ou les images de synthèse. En l'occurrence, il s'agit alors de « soulager » le traitement d'un certain nombre d'informations ponctuelles jugées non pertinentes ou insuffisamment significatives sur la géométrie de l'objet traité.

À cet effet, quelques algorithmes de réduction polygonale ont été mis au point. Parmi ces traitements, on peut citer les algorithmes de Hakimi-Scheichel, de Imai-Iri, et en particulier de Douglas-Peuker. Il est entendu que l'homme du métier connaît ces algorithmes et est apte à les mettre en oeuvre.

À titre d'exemple et de façon non limitative, nous décrirons l'invention en utilisant l'algorithme de Douglas-Peuker.

La plupart de ces algorithmes nécessitent une valeur numérique arbitraire en entrée appelée coefficient de réduction ou coefficient de simplification qui détermine la perte de précision qui sera appliquée au tracé d'origine. Typiquement, plus ce coefficient est grand, plus le tracé est grossier.

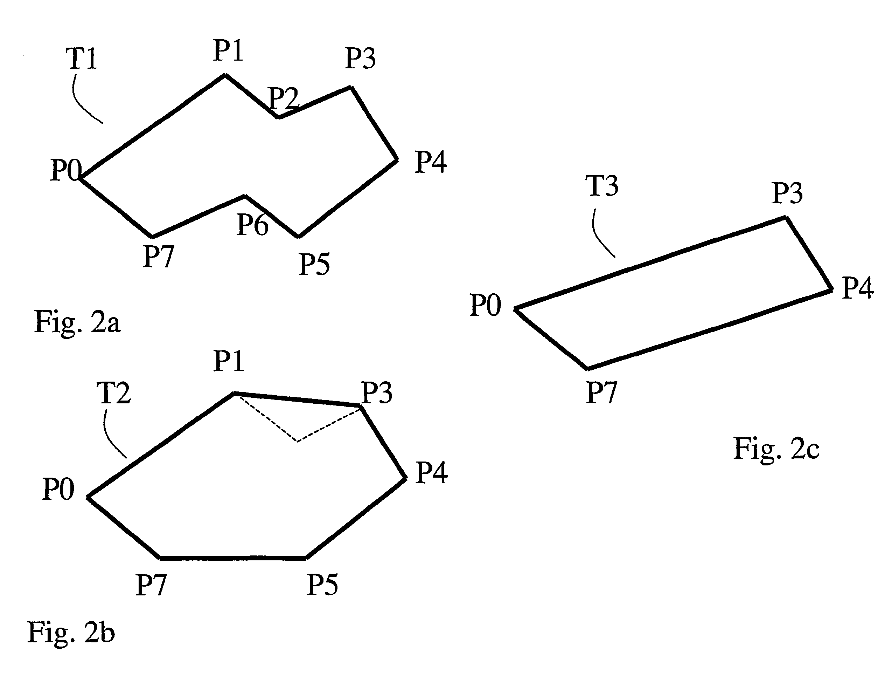

Les figures 2a à 2c illustrent la mise en oeuvre d'un algorithme de réduction polygonale de type Douglas-Peuker. Le polygone initial correspondant à un tracé T1 représenté figure 2a est constitué de lignes polygonales délimitées par les points P0 à P7.

On applique une réduction a ce polygone pour obtenir le polygone de la figure 2b correspondant au tracé T2. À titre indicatif, les deux lignes polygonales supprimées suite à l'élimination du point P2 ont été laissées en pointillés sur la figure 2b. On note que selon l'algorithme de Douglas-Peuker, le coefficient de réduction appliqué à chaque étape de réduction détermine le nombre de points éliminés, et donc la simplification des lignes polygonales.

Une troisième étape de simplification est représentée figure 2c pour un tracé T3 où les points P1 et P5 ont été éliminés ainsi que les lignes polygonales correspondantes.

Cet algorithme est connu en soi, mais on note simplement que si T1, T2, T3 représente respectivement :
- le tracé d'origine,
- le tracé d'origine simplifié d'un coefficient C1 et,
- le tracé d'origine simplifié d'un coefficient C2 supérieur à C1,
alors tous les points du tracé T3 sont aussi des points du tracé T2, qui sont eux-mêmes des points du tracé T1.

Selon l'invention, on réalise à chaque étape de la simplification décrite ci-dessus une triangulation des surfaces définies par les lignes polygonales simplifiées ou initiales.

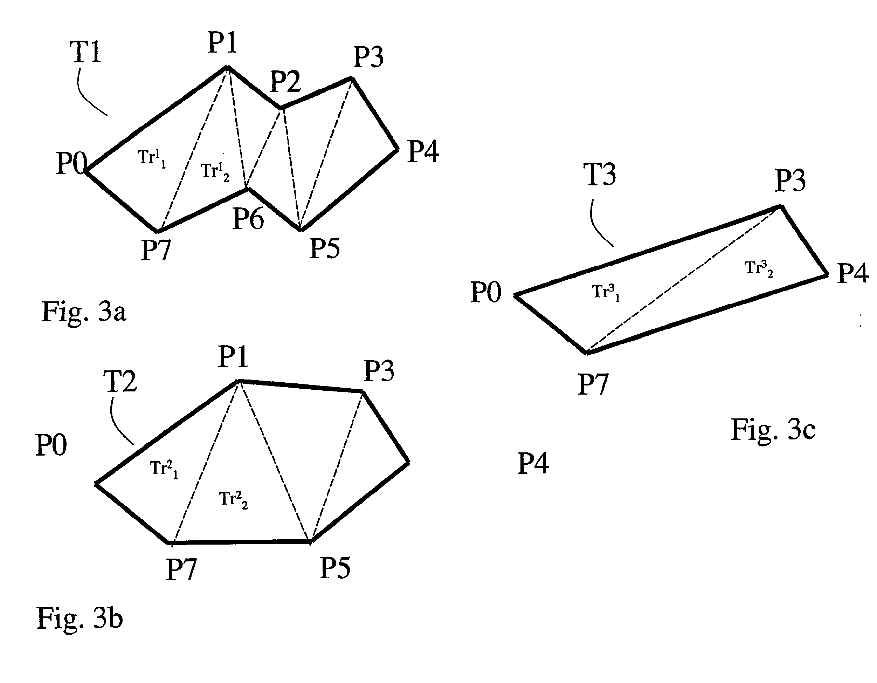

Cette triangulation est illustrée figures 3a à 3c pour les tracés des figures 2a à 2c. On démontre en effet que tout polygone peut être maillé par un ensemble de triangles.

Chaque niveau de simplification Ci définit donc un ensemble de triangles **TRᵢ**= {Trⁱⱼ , j de 1 à nᵢ}, chacun des Trⁱⱼ étant défini bien sûr par trois points sommets de la ligne polygonale Lᵢ correspondant par exemple à une simplification de Ci d'une ligne initiale L₁.

On notera que comme des points sont éliminés d'un degré de simplification à un autre et que la triangulation est réalisée après chaque simplification, des triangles nouveaux sont susceptibles d'être créés à chaque étape de la simplification.

Sur les figures 3a, 3b, 3c, on voit par exemple que l'on a Tr²₁ = Tr¹₁, mais que le triangle Tr²₂ est nouveau par rapport à l'étape de simplification précédente.

Selon l'invention, suite à cette triangulation des différentes simplifications, on stocke les différentes données de triangulation dans une base de données en fonction du coefficient de simplification de la ligne polygonale. La base de données contient donc les triangles tels que définis dans l'étape précédemment décrite associés à un identifiant du coefficient de simplification.

On décrit maintenant le principe de reconstruction de l'image sur un terminal distant relié à la base de données comprenant les informations telles que décrites plus haut.

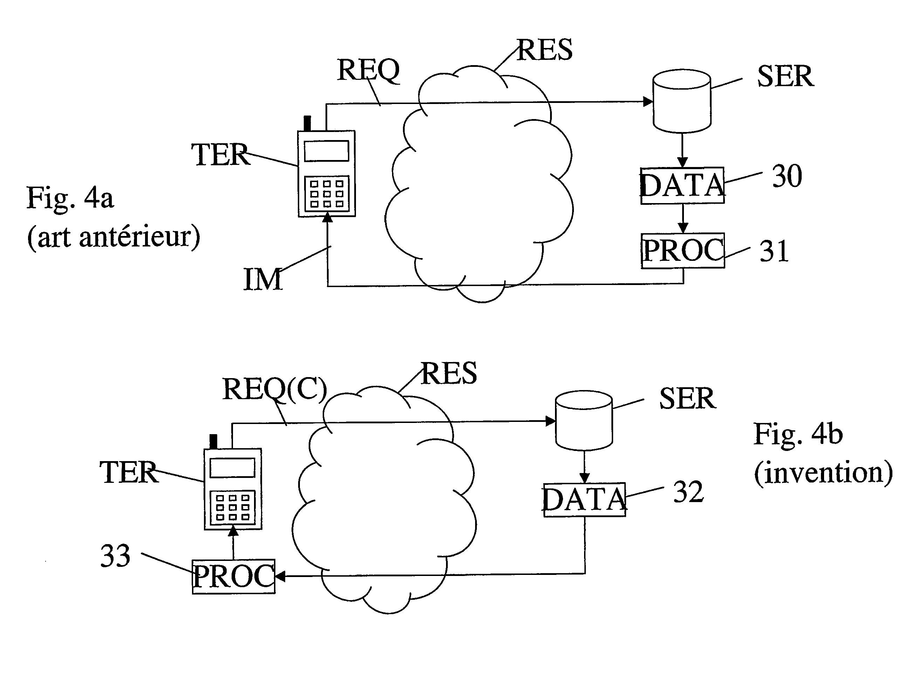

Cette technique est utilisable dans le cadre d'une carte « vecteur » dynamique. Par le terme dynamique, on entend la possibilité de mener un zoom avant dans la carte, en temps réel. De nombreuses applications connues fonctionnent sur le principe de la requête client/serveur à chaque demande de déplacement ou de zoom de la part du client. Les coordonnées de la carte, ainsi que la nature du mouvement (zoom ou déplacement), côté utilisateur, sont envoyés au serveur. Dans ce contexte de l'état de l'art, le serveur recalcule la carte mise à jour, puis transmet l'image obtenue au client, comme représenté sur la figure 4a.

En référence à la figure 4a des procédés usuels de l'état de la technique, sur requête REQ du terminal TER, le serveur SER :
- extrait à l'étape 30, toutes les données de l'image initiale,
- calcule, à l'étape 31, une modification de l'image car par exemple un zoom arrière aurait été requis par l'utilisateur du terminal TER, et
- transmet les données IM ainsi traitées via le réseau de télécommunication RES.

Bien entendu, la requête REQ du terminal, comme les données d'image transmises IM, transite par le réseau de télécommunication RES.

En référence maintenant à la figure 4b relative à l'invention, le terminal TER dispose de toutes les informations nécessaires au zoom et au déplacement, comme on le verra plus loin, et, plus particulièrement, est capable, à partir d'une série de points qui sont fonction de coefficients de simplification par exemple successifs ordonnés dans le sens des échelles croissantes (valeur décroissante des coefficients de simplification), d'éditer la carte sur un écran d'affichage (non représenté).

Par exemple, si l'utilisateur a requis un zoom avant, des triangles (définis par un triplet de points) associés à la simplification C permettant l'édition de la carte à une échelle plus grande, sont téléchargés du serveur SER (étape 32) comme suit :
- le passage de l'un des paliers de zoom provoque un appel spécifique REQ(C) vers le serveur SER ;
- le serveur SER renvoie alors les triplets associés aux triangles résultant de la triangulation au niveau de simplification C de l'image initiale (étape 32);
- sur réception de ces points, le terminal TER met à jour la liste de points définissant l'image à afficher (étape 33).

Il est entendu que la requête REQ (C) dépend notamment du coefficient de simplification C associé, dans la base de données du serveur SER, aux triangles associés aux triplets de points qui sont demandés par le terminal TER pour réaliser par exemple un zoom avant d'une image en cours d'édition.

L'homme du métier comprendra qu'afin d'accélérer le traitement et la transmission de données du serveur vers le terminal, il est possible, lorsque l'on passe d'un coefficient de simplification à un autre, de n'envoyer que les triangles qui n'étaient pas déjà présents dans la simplification précédente. En effet, comme il a été mentionné plus haut, lors des différentes triangulations, certains triangles restent identiques vis-à-vis du triplet associé, alors que d'autres changent. Dans ce cas, l'envoi des seuls triangles modifiés réduit la quantité d'information transmise sur le réseau et donc la vitesse d'exécution du procédé selon l'invention. Un programme côté terminal sait alors interpréter et traiter les données reçues au passage entre différents niveaux de simplification.

En termes généraux, on comprendra que le serveur contient donc une base de données comportant au moins pour chaque identifiant de coefficient de simplification, un ensemble de triplets définissant des triangles résultant d'une triangulation des tracés simplifiés.

Selon un mode de réalisation avantageux, la base de données peut être hiérarchisée en fonction des coefficients de simplification, et dans ce cas, elle contient au moins :
- un premier ensemble de triplets associés à un premier coefficient,
- et, associé à un second coefficient de simplification de valeur inférieur au premier coefficient, un second jeu de triplets correspondant aux triplets non présents dans le premier ensemble.

On notera bien cependant que, comme il a été mentionné plus haut, les ensembles de triplets de chaque niveau de simplification ne sont pas nécessairement inclus les uns dans les autres (un triangle pouvant servir pour la triangulation selon un niveau de simplification et pas pour le niveau suivant). On ne peut donc pas se contenter de stocker dans la base les triangles complémentaires, et au mieux, on peut éviter de répéter les triangles déjà stockés.

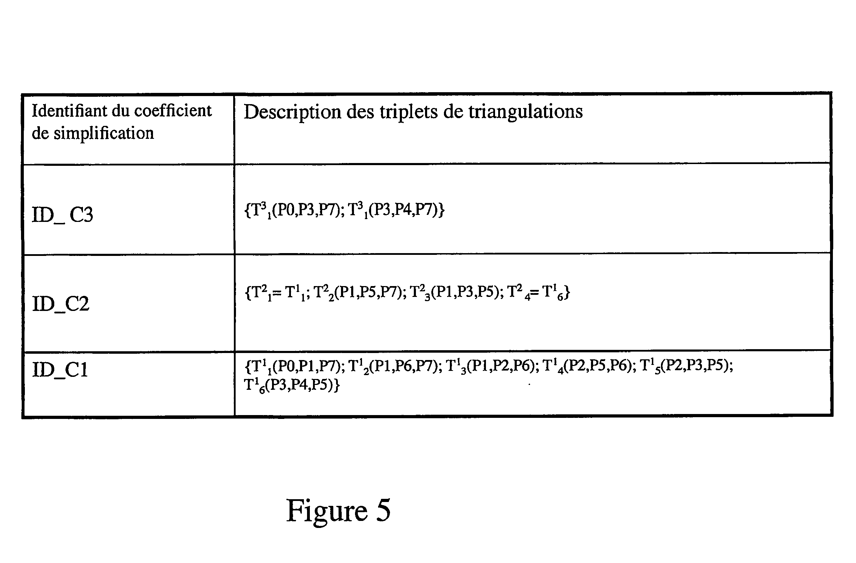

Un exemple de tableau modélisant une structure de la base de données est fourni figure 5, avec en première colonne les identifiants des coefficients de simplification, et en seconde colonne, les descriptions des triplets de triangulation.

Il est entendu que le coefficient de simplification particulier contenu dans la requête peut être défini par un tableau définissant, pour chaque niveau de zoom, le coefficient de simplification à appliquer et à appeler dans la base.

Par ailleurs, selon un autre mode de réalisation non représenté, la base de données comportant les données définissant les triangles comme sur la figure 5 n'est pas stockée sur un serveur distant, mais directement en local au niveau du terminal, par exemple sur une carte mémoire de type SD-Card. Les différents appels précédemment décrits sont alors réalisés en local sans passage par un réseau de communication. Il est également possible de stocker la base de données d'images sur le terminal (TER) de l'utilisateur. Ainsi, de façon générale, selon ce mode de réalisation, la base de données est embarquée à bord du terminal (TER).

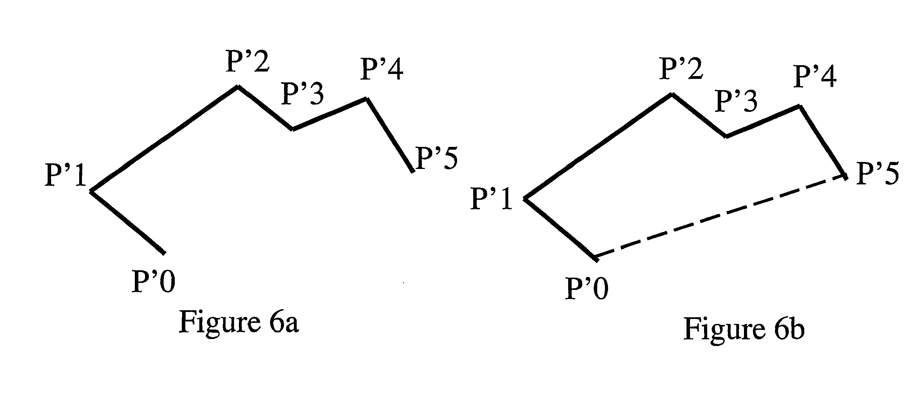

On notera enfin afin de compléter la description pour l'homme du métier, que dans le cas où les lignes polygonales définissent une zone ouverte, comme c'est illustré figure 6a, le procédé de triangulation est mis en oeuvre sur une la surface fermée fictive définie par liaison entre les points laissés libres comme sur la figure 6b. Ce procédé est particulièrement avantageux pour la représentation de zones de type fleuve ou route qui ne sont pas nécessairement des surfaces fermées.

On décrit maintenant quelques exemples d'applications du procédé au sens de l'invention, notamment pour effectuer des opérations de zoom ou de saisir/glisser (ou drag and drop en langue anglaise).

Au lancement de l'application, chaque objet géographique est reconstitué des points qu'il contient en fonction de l'échelle et du niveau de réduction initiaux. Ensuite, selon un mode de réalisation, en cas de zoom, une fois qu'un palier de réduction est franchi, ceci déclenche un appel à la base pour la fourniture des triplets associés au niveau de simplification, et éventuellement, seulement des triplets nouveaux. Un filtrage a alors lieu au niveau du terminal pour l'édition de la zone zoomée.

On indique que l'on ne s'intéresse ici qu'aux tracés se trouvant dans la zone de visualisation sur l'écran d'affichage du terminal, afin de limiter le volume de données à recevoir et d'augmenter ainsi la fluidité de l'application interactive.

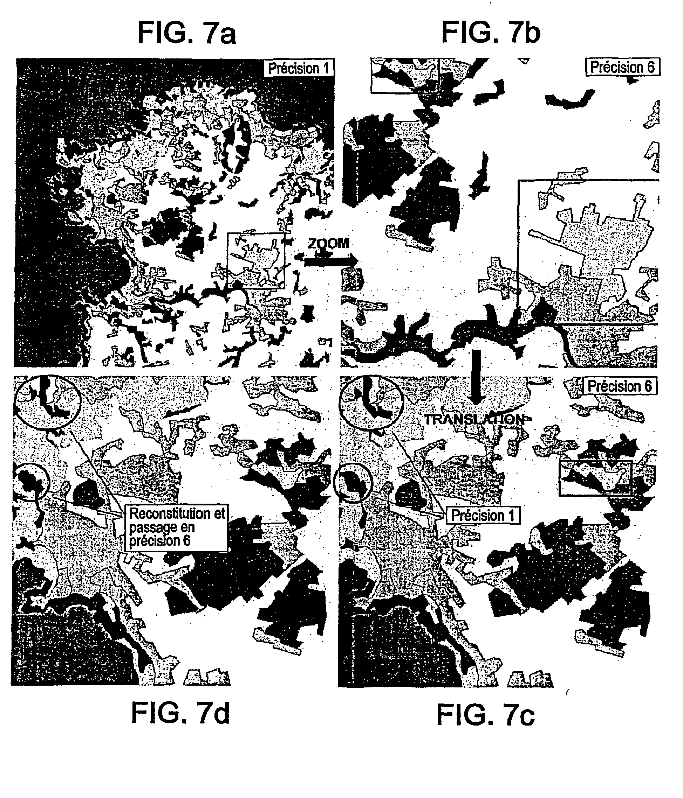

Par exemple, un utilisateur effectue un zoom dans le centre de la carte, et franchit ainsi six paliers de réduction sur dix que peut contenir l'application (passage de la figure 7a à la figure 7b). Puis, il déplace la carte (« drag and drop ») vers la gauche (passage de la figure 7b à la figure 7c). Au moment de ce déplacement, une partie des objets géographiques, en particulier ceux contenus dans la zone de visualisation lors du zoom, sont en précision 6, une autre partie est en précision 5, une autre en précision 4, et ainsi de suite (figure 7c). À la fin du déplacement, une requête REQ est alors envoyée pour récupérer les triplets au niveau de précision requis (niveau 6), en évitant éventuellement l'envoi de triplets redondants avec les triplets de niveau inférieur.

On notera enfin que l'utilisation d'un maillage des surfaces induites par les lignes polygonales définissant les zones de la carte permet de naviguer dans la carte en 3 dimensions de façon tout à fait efficace. L'utilisateur peut donc, en plus des zoom et des déplacements dans le plan, réaliser des déplacements en altitude, en faisant pivoter la carte pour observer les reliefs éventuels. Ce procédé est donc parfaitement adapté à la navigation et à l'édition de cartes géographiques numériques en trois dimensions.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de traitement de données d'images numériques sous forme de graphique vectoriel, les images comportant des zones délimitées par des lignes polygonales comportant les étapes consistant à :
- associer à chaque ligne polygonale une surface induite délimitée par l'ensemble des points définissant ladite ligne polygonale ;
- pour toutes les lignes polygonales, stocker en mémoire les points définissant lesdites lignes polygonales ;
- effectuer des simplifications successives desdites lignes polygonales en fonction d'un ensemble de coefficients de simplification ;
- associer à chaque ligne polygonale simplifiée une surface simplifiée induite délimitée par l'ensemble des points définissant ladite ligne polygonale simplifiée, chaque surface simplifiée ainsi obtenue étant décrite par un ensemble de triangles dont chacun des sommets appartient à la ligne polygonale simplifiée associée à ladite surface simplifiée ;
- mémoriser dans une base de données en fonction d'un identifiant de coefficient de simplification ledit ensemble de triangles décrivant ladite surface simplifiée associée audit coefficient de simplification ;
- réaliser un appel à ladite base de données de triangles, en fonction d'un identifiant de coefficient pour la reconstruction de ladite image simplifiée selon ledit coefficient de simplification.

2. Procédé selon la revendication 1, dans lequel on télécharge des données d'images d'un serveur vers un terminal, **caractérisé en ce que** :
- ladite base de données est constituée auprès du serveur (SER) ;
- les triplets associés auxdits triangles résultant d'une triangulation d'une surface simplifiée sont téléchargés du serveur selon une requête (REQ (C)) du terminal (TER) comprenant au moins un identifiant de coefficient de simplification et,
- le terminal construit et édite une image simplifiée selon ledit coefficient de simplification identifié.

3. Procédé selon la revendication 1, dans lequel on charge des données d'images contenues dans une base de données embarquée à bord du terminal (TER), **caractérisé en ce que** :
- les triplets associés auxdits triangles résultant d'une triangulation d'une surface simplifiée sont chargés selon une requête (REQ (C)) du terminal (TER) comprenant au moins un identifiant de coefficient de simplification et,
- le terminal construit et édite une image simplifiée selon ledit coefficient de simplification identifié.

4. Procédé selon la revendication 1, **caractérisé en ce que** la base de données comporte au moins des ensemble de triplets définissant des triangles de triangulation d'une surface d'image simplifiée chaque ensemble de triplets étant associé à un coefficient de simplification.

5. Procédé selon la revendication 1, **caractérisé en ce que** la base de données comporte au moins :
- un premier ensemble de triplets définissant des triangles issus de la triangulation d'une surface d'image simplifiée associés à un premier coefficient de simplification ;
- et, associé à un second coefficient de simplification de valeur inférieur au premier coefficient, un second ensemble de triplets correspondant aux triplets non présents dans ledit premier ensemble pour la reconstruction de l'image suivant ledit second coefficient de simplification.

6. Procédé selon la revendication 1, **caractérisé en ce que** ladite étape de simplification utilise un traitement selon un algorithme dit de « Douglas-Peucker ».

7. Application du procédé selon l'une des revendications précédentes à l'édition de cartes géographiques sous forme de graphiques vectoriels.

8. Application du procédé selon l'une des revendications précédentes à l'édition de cartes géographiques tridimensionnelles sous forme de graphiques vectoriels.

9. Système de traitement de données d'images numériques sous forme de graphique vectoriel, les images comportant des zones délimitées par des lignes polygonales comportant les moyens suivants:
- moyens pour associer à chaque ligne polygonale une surface induite délimitée par l'ensemble des points définissant ladite ligne polygonale;
- pour toutes les lignes polygonales, moyens pour stocker en mémoire les points définissant lesdites lignes polygonales;
- moyens pour effectuer des simplifications successives desdites lignes polygonales en fonction d'un ensemble de coefficients de simplification;
- moyens pour associer à chaque ligne polygonale simplifiée une surface simplifiée induite délimitée par l'ensemble des points définissant ladite ligne polygonale simplifiée, chaque surface simplifiée ainsi obtenue étant décrite par un ensemble de triangles dont chacun des sommets appartient à la ligne polygonale simplifiée associée à ladite surface simplifiée;
- moyens pour mémoriser dans une base de données en fonction d'un identifiant de coefficient de simplification ledit ensemble de triangles décrivant ladite surface simplifiée associée audit coefficient de simplification;
- moyens pour réaliser un appel à ladite base de données de triangles, en fonction d'un identifiant de coefficient pour la reconstruction de ladite image simplifiée selon ledit coefficient de simplification,
comportant en outre un terminal (TER) et un serveur (SER) reliés par un réseau de télécommunication (RES), pour l'édition de graphiques vectoriels sur le terminal.

10. Système de traitement de données d'images numériques sous forme de graphique vectoriel, les images comportant des zones délimitées par des lignes polygonales comportant les moyens suivants:
- moyens pour associer à chaque ligne polygonale une surface induite délimitée par l'ensemble des points définissant ladite ligne polygonale;
- pour toutes les lignes polygonales, moyens pour stocker en mémoire les points définissant lesdites lignes polygonales;
- moyens pour effectuer des simplifications successives desdites lignes polygonales en fonction d'un ensemble de coefficients de simplification;
- moyens pour associer à chaque ligne polygonale simplifiée une surface simplifiée induite délimitée par l'ensemble des points définissant ladite ligne polygonale simplifiée, chaque surface simplifiée ainsi obtenue étant décrite par un ensemble de triangles dont chacun des sommets appartient à la ligne polygonale simplifiée associée à ladite surface simplifiée;
- moyens pour mémoriser dans une base de données en fonction d'un identifiant de coefficient de simplification ledit ensemble de triangles décrivant ladite surface simplifiée associée audit coefficient de simplification;
- moyens pour réaliser un appel à ladite base de données de triangles, en fonction d'un identifiant de coefficient pour la reconstruction de ladite image simplifiée selon ledit coefficient de simplification,
comportant en outre un terminal (TER) et un moyen pour stocker ladite base de données au niveau dudit terminal.

11. Programme d'ordinateur destiné à être stocké dans une mémoire d'un serveur d'un réseau de télécommunication comportant des instructions pour :
- lire des données de points d'une image vectorielle ;
- mettre en oeuvre au moins une partie des étapes de traitement du procédé selon l'une des revendications 1 à 6.

12. Programme d'ordinateur destiné à être stocké dans une mémoire d'un terminal comportant des instructions pour :
- lire des données dans la base de données comprenant les données pour la mise en oeuvre du procédé selon l'une des revendications 1 à 6 ;
- éditer, à partir de ces données, une image sur un écran d'affichage dudit terminal.

## Claims

1. Method for processing digital image data in the form of vector graphs, wherein the images include zones defined by polygonal lines including the steps consisting of:
- associating to each polygonal line an induced surface area defined by the set of points which define said polygonal line;
- for all of the polygonal lines, storing in memory the points which define said polygonal lines;
- carrying out successive simplifications of said polygonal lines in function of a set of simplification coefficients;
- associating to each simplified polygonal line a simplified induced surface area defined by the set of points which define said simplified polygonal line, wherein each simplified surface area thus obtained is described by a set of triangles of which each of the summits is part of the simplified polygonal line associated to said simplified surface area;
- memorising in a data base in function of a simplification coefficient identifier said set of triangles which describe said simplified surface area associated to said simplification coefficient;
- calling on said triangle data base, in function of a coefficient identifier, to reconstruct said simplified image according to said simplification coefficient.

2. Method according to claim 1, wherein the image data is downloaded from a server to a terminal, **characterised in that**:
- said data base is formed on the server (SER);
- the triplets associated to said triangles which result from a triangulation of a simplified surface area are downloaded from the server using a request (REQ (C)) from the terminal (TER) comprising at least one simplification coefficient identifier, and;
- the terminal builds and edits a simplified image according to said identified simplification coefficient.

3. Method according to claim 1, wherein the image data contained in a data base integrated into the terminal (TER) is loaded, **characterised in that**:
- the triplets associated to said triangles which result from a triangulation of a simplified surface area are loaded using a request (REQ (C)) from the terminal (TER) comprising at least one simplification coefficient identifier, and;
- the terminal builds and edits a simplified image according to said identified simplification coefficient.

4. Method according to claim 1, **characterised in that** the data base includes at least sets of triplets which define triangulation triangles of a simplified image surface area, wherein each set of triplets is associated to a simplification coefficient.

5. Method according to claim 1, **characterised in that** the data base includes at least:
- a first set of triplets which defines triangulation triangles of a simplified image surface area associated to a simplification coefficient;
- and, associated to a second simplification coefficient whose value is lower than that of the first coefficient, a second set of triplets which corresponds to the triplets that are not present in said first set to reconstruct the image using said second simplification coefficient.

6. Method according to claim 1, **characterised in that** said simplification step uses processing according to a "Douglas-Peucker" algorithm.

7. Application of the method according to any of the previous claims, for the edition of geographical maps in the form of vector graphs.

8. Application of the method according to any of the previous claims, for the edition of 3D geographical maps in the form of vector graphs.

9. System for processing digital image data in the form of vector graphs, wherein the images include zones defined by polygonal lines including the following means:
- means for associating to each polygonal line an induced surface area defined by the set of points which define said polygonal line;
- for all of the polygonal lines, means for storing in memory the points which define said polygonal lines;
- means for carrying out successive simplifications of said polygonal lines in function of a set of simplification coefficients;
- means for associating to each simplified polygonal line a simplified induced surface area defined by the set of points which define said simplified polygonal line, wherein each simplified surface area thus obtained is described by a set of triangles of which each of the summits is part of the simplified polygonal line associated to said simplified surface area;
- means for memorising in a data base in function of a simplification coefficient identifier said set of triangles which describe said simplified surface area associated to said simplification coefficient;
- means for calling on said triangle data base, in function of a coefficient identifier, to reconstruct said simplified image according to said simplification coefficient,
further including a terminal (TER) and a server (SER) connected by a telecommunication network (RES) for the edition of vector graphs on the terminal.

10. System for processing digital image data in the form of vector graphs, wherein the images include zones defined by polygonal lines including the following means:
- means for associating to each polygonal line an induced surface area defined by the set of points which define said polygonal line;
- for all of the polygonal lines, means for storing in memory the points which define said polygonal lines;
- means for carrying out successive simplifications of said polygonal lines in function of a set of simplification coefficients;
- means for associating to each simplified polygonal line a simplified induced surface area defined by the set of points which define said simplified polygonal line, wherein each simplified surface area thus obtained is described by a set of triangles of which each of the summits is part of the simplified polygonal line associated to said simplified surface area;
- means for memorising in a data base in function of a simplification coefficient identifier said set of triangles which describe said simplified surface area associated to said simplification coefficient;
- means for calling on said triangle data base, in function of a coefficient identifier, to reconstruct said simplified image according to said simplification coefficient,
further including a terminal (TER) and means for storing said data base on said terminal.

11. Computer program designed to be stored in a memory of a server of a telecommunication network including instructions for:
- reading the data of vector image points;
- implementing at least part of the processing steps of the method according to any of claims 1 to 6.

12. Computer program designed to be stored in a memory of a terminal including instructions for:
- reading the data in the data base comprising the data for the implementation of the method according to any of claims 1 to 6;
- editing, based on this data, an image on a display screen of said terminal.

## Patentansprüche

1. Verfahren zur Behandlung von numerischen Daten von Bildern in Vektorgraphikform, wobei die Bilder durch Polygonallinien begrenzte Bereiche umfassen, umfassend die Schritte,
- jeder Polygonallinie eine induzierte Fläche zuzuordnen, die durch die Menge der Punkte begrenzt ist, die die Polygonallinie definieren;
- für alle Polygonallinien die Punkte in einem Speicher zu speichern, die die Polygonallinien definieren;
- sukzessive Vereinfachungen der Polygonallinien in Abhängigkeit von einer Menge von Vereinfachungskoeffizienten zu bewirken;
- jeder vereinfachten Polygonallinie eine vereinfachte induzierte Fläche zuzuordnen, die durch die Menge der Punkte begrenzt ist, die die vereinfachte Polygonallinie definieren, wobei jede derart erhaltene vereinfachte Fläche durch eine Menge von Dreiecken beschrieben ist, wobei jeder der Scheitelpunkte der Dreiecke zu der vereinfachten Polygonallinie gehört, die der vereinfachten Fläche zugeordnet ist;
- in einer Datenbank in Abhängigkeit von einem Vereinfachungskoeffizientkennzeichen die Menge von Dreiecken zu speichern, die die dem Vereinfachungskoeffizienten zugeordnete vereinfachte Fläche beschreibt;
- einen Abruf der Datenbank von Dreiecken durchzuführen in Abhängigkeit von einem Koeffizientkennzeichen zur Rekonstruktion des vereinfachten Bildes gemäß dem Vereinfachungskoeffizienten.

2. Verfahren nach Anspruch 1, wobei Daten von Bildern von einem Server zu einem Terminal geladen werden, **dadurch gekennzeichnet, dass**
- die Datenbank bei dem Server (SER) gebildet wird;
- die den aus einer Triangulierung einer vereinfachten Fläche resultierenden Dreiecken zugeordneten Triplets von dem Server gemäß einer Anfrage (REQ(C)) des Terminals (TER) geladen werden, die wenigstens ein Vereinfachungskoeffizientkennzeichen umfasst, und
- das Terminal ein vereinfachtes Bild gemäß dem identifizierten Vereinfachungskoeffizienten bildet und ausgibt.

3. Verfahren nach Anspruch 1, wobei Daten von Bildern geladen werden, die in einer auf dem Terminal (TER) befindlichen Datenbank enthalten sind, **dadurch gekennzeichnet, dass**
- die den aus einer Triangulierung einer vereinfachten Fläche resultierenden Dreiecken zugeordneten Triplets gemäß einer Anfrage (REQ (C)) des Terminals (TER) geladen werden, die wenigstens ein Vereinfachungskoeffizientkennzeichen umfasst, und
- das Terminal ein vereinfachtes Bild gemäß dem identifizierten Vereinfachungskoeffizienten bildet und ausgibt.

4. Verfahren nach Anspruch 1, **dadurch gekennzeichnet, dass** die Datenbank wenigstens Mengen von Triplets umfasst, die Dreiecke einer Triangulierung einer vereinfachten Bildfläche definieren, wobei jede Menge von Triplets einem Vereinfachungskoeffizienten zugeordnet ist.

5. Verfahren nach Anspruch 1, **dadurch gekennzeichnet, dass** die Datenbank wenigstens umfasst:
- eine erste Menge von Triplets, die der Triangulierung einer vereinfachten Bildfläche entstammende Dreiecke definieren, die einem ersten Vereinfachungskoeffizienten zugeordnet sind;
- und eine zweite Menge von Triplets, die einem zweiten Vereinfachungskoeffizienten zugeordnet ist, dessen Wert kleiner ist als der des ersten Koeffizienten, wobei die Triplets den Triplets entsprechen, die in der ersten Menge nicht enthalten sind zur Rekonstruktion des Bildes gemäß dem zweiten Vereinfachungskoeffizienten.

6. Verfahren nach Anspruch 1, **dadurch gekennzeichnet, dass** in dem Vereinfachungsschritt eine Verarbeitung nach einem nach Douglas-Peucker benannten Algorithmus angewendet wird.

7. Verwendung des Verfahrens nach einem der vorhergehenden Ansprüche zur Ausgabe von geographischen Karten in Vektorgraphikform.

8. Verwendung des Verfahrens nach einem der vorhergehenden Ansprüche zur Ausgabe von dreidimensionalen geographischen Karten in Vektorgraphikform.

9. System zur Verarbeitung von numerischen Daten von Bildern in Vektorgraphikform, wobei die Bilder durch Polygonallinien begrenzte Bereiche umfassen, umfassend die folgenden Mittel:
- Mittel, um jeder Polygonallinie eine induzierte Fläche zuzuordnen, die durch die Menge der Punkte begrenzt ist, die die Polygonallinie definieren;
- Mittel, um für alle Polygonallinien die Punkte in einem Speicher zu speichern, die die Polygonallinien definieren;
- Mittel, um sukzessive Vereinfachungen der Polygonallinien in Abhängigkeit von einer Menge von Vereinfachungskoeffizienten zu bewirken;
- Mittel, um jeder vereinfachten Polygonallinie eine vereinfachte induzierte Fläche zuzuordnen, die durch die Menge der Punkte begrenzt ist, die die vereinfachte Polygonallinie definieren, wobei jede derart erhaltene vereinfachte Fläche durch eine Menge von Dreiecken beschrieben ist, wobei jeder der Scheitelpunkte der Dreiecke zu der vereinfachten Polygonallinie gehört, die der vereinfachten Fläche zugeordnet ist;
- Mittel, um in einer Datenbank in Abhängigkeit von einem Vereinfachungskoeffizientkennzeichen die Menge von Dreiecken zu speichern, die die dem Vereinfachungskoeffizienten zugeordnete vereinfachte Fläche beschreibt;
- Mittel, um einen Abruf der Datenbank von Dreiecken durchzuführen in Abhängigkeit von einem Koeffizientkennzeichen zur Rekonstruktion des vereinfachten Bildes gemäß dem Vereinfachungskoeffizienten,
ferner umfassend ein Terminal (TER) und einen Server (SER), die durch ein Telekommunikationsnetz (RES) verbunden sind, zur Ausgabe von Vektorgraphiken auf dem Terminal.

10. System zur Verarbeitung von numerischen Daten von Bildern in Vektorgraphikform, wobei die Bilder durch Polygonallinien begrenzte Bereiche umfassen, umfassend die folgenden Mittel:
- Mittel, um jeder Polygonallinie eine induzierte Fläche zuzuordnen, die durch die Menge der Punkte begrenzt ist, die die Polygonallinie definieren;
- Mittel, um für alle Polygonallinien die Punkte in einem Speicher zu speichern, die die Polygonallinien definieren;
- Mittel, um sukzessive Vereinfachungen der Polygonallinien in Abhängigkeit von einer Menge von Vereinfachungskoeffizienten zu bewirken;
- Mittel, um jeder vereinfachten Polygonallinie eine vereinfachte induzierte Fläche zuzuordnen, die durch die Menge der Punkte begrenzt ist, die die vereinfachte Polygonallinie definieren, wobei jede derart erhaltene vereinfachte Fläche durch eine Menge von Dreiecken beschrieben ist, wobei jeder der Scheitelpunkte der Dreiecke zu der vereinfachten Polygonallinie gehört, die der vereinfachten Fläche zugeordnet ist;
- Mittel, um in einer Datenbank in Abhängigkeit von einem Vereinfachungskoeffizientkennzeichen die Menge von Dreiecken zu speichern, die die dem Vereinfachungskoeffizienten zugeordnete vereinfachte Fläche beschreibt;
- Mittel, um einen Abruf der Datenbank von Dreiecken durchzuführen in Abhängigkeit von einem Koeffizientkennzeichen zur Rekonstruktion des vereinfachten Bildes gemäß dem Vereinfachungskoeffizienten,
ferner umfassend ein Terminal (TER) und ein Mittel zur Speicherung der Datenbank auf Höhe des Terminals.

11. Computerprogramm, das dazu bestimmt ist, in einem Speicher eines Servers eines Telekommunikationsnetzes gespeichert zu sein, umfassend Anweisungen zum
- Lesen von Daten von Punkten eines Vektorbildes;
- Durchführen wenigstens eines Teils der Verarbeitungsschritte des Verfahrens nach einem der Ansprüche 1 bis 6.

12. Computerprogramm, das dazu bestimmt ist, in einem Speicher eines Terminals gespeichert zu sein, umfassend Anweisungen zum
- Lesen von Daten in der Datenbank, umfassend die Daten zur Durchführung des Verfahrens nach einem der Ansprüche 1 bis 6;
- Ausgabe eines Bildes auf einem Anzeigebildschirm des Terminals auf Grundlage dieser Daten.
